# EUROPEAN PATENT SPECIFICATION

(11) **EP 2 449 869 B1**
(45) Date of publication and mention of the grant of the patent: **03.09.2014**
(21) Application number: 11187954.0
(22) Date of filing: 04.11.2011
(51) Int. Cl.: A01B 71/08, A01D 37/00

(54) **Highly dust-tight reap-binder group for agricultural machines**
Hochstaubdichte, Ernte-Binder-Gruppe für landwirtschaftliche Maschinen
Groupe de moissonneuse-lieuse très hermétique à la poussière pour machines agricoles

(30) Priority: 08.11.2010 IT MI20102068
(43) Date of publication of application: 09.05.2012
(73) Proprietor: BCS S.p.A., 20123 Milano (MI) (IT)
(72) Inventor: Moscardin, Adriano, 20081 Abbiategrasso (MI) (IT)
(74) Representative: Lotti, Giorgio

(56) References cited:
- AT-B- 241 876
- CN-Y- 2 811 655
- DE-A1- 3 544 783

## Description

The present invention refers to a highly dust-tight reap-binder group .

Such machines generally comprise a cutting blade placed at a short distance from the ground so as to cut the base of plants encountered by the advancing vehicle and, at the back of the blade, two shaped barriers so as to obtain a channel that is perpendicular to the aforementioned blade.

The reap-binder group, while advancing, conveys the cut plants into the aforementioned channel and, once a predetermined amount of cut and conveyed plants has been reached, takes care of forming sheaves and subsequently deposits them on the ground.

These machines that have just been described, and that are known today, however, have some drawbacks.

Indeed, reap-binder machines often operate in contaminated environments which are rich in particles which are often volatile and which have high abrasive capability which are sometimes able to penetrate inside the driving casing through the outlet point of the drive shafts of the forks.

In such a case, the function of the lubricants placed inside the casing is quickly nullified and, in actual fact, is converted into an abrasive action that is capable of making the mechanical components wear out early.

This situation happens frequent since the cutting apparatus, along with most of the mechanical driving members, are near to the ground.

One solution to this problem could consist of rigidly "sealing" the outlet point of the drive shafts of the forks from the casing.

However, such a solution is disadvantageous, on one hand, because it would require an excessive bulk in height such as to jeopardise the proper operation of the machine and, on the other hand, because the high rigidity clashes with the necessity of having shafts, forks and supports that are capable of absorbing elastic deformations so as to follow the shape of the plant to be reaped in the best way possible.

AT 241876 discloses a reap-binder group according to the preamble of claim 1.

The purpose of the present invention is that of making a highly dust-tight reap-binder group for agricultural machines capable of solving the aforementioned drawbacks of the prior art in an extremely simple, cost-effective and particularly functional manner. Another purpose is that of making a highly dust-tight reap-binder group for agricultural machines in which it is not required for there to be a high structural rigidity of the machine.

These purposes according to the present invention are achieved by making a highly dust-tight reap-binder group for agricultural machines as outlined in claim 1 .

Further characteristics of the invention are highlighted in the dependent claims.

The characteristics and the advantages of a highly dust-tight reap-binder group for agricultural machines according to the present invention shall become clearer from the following description, given as an example and not for limiting purposes, with reference to the attached schematic drawings, in which:
- figure 1 is a schematic view of a reap-binder group for agricultural machines;

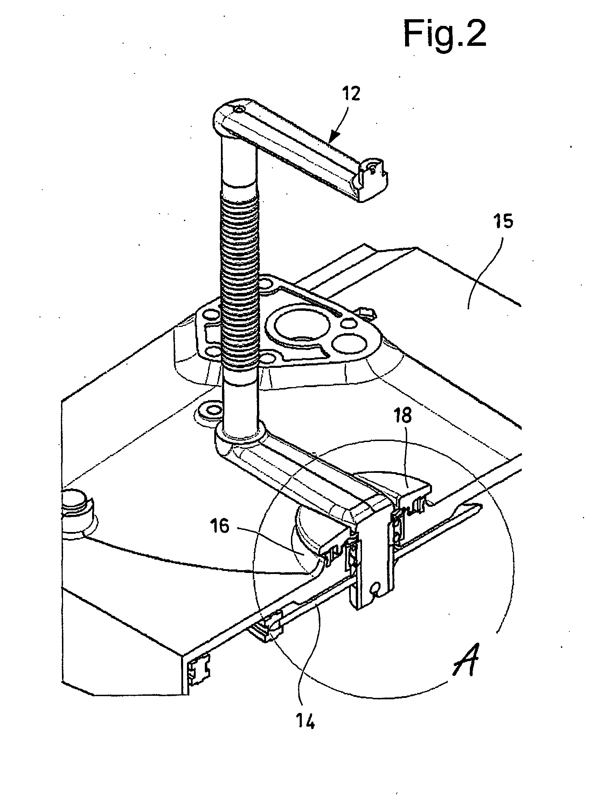

- figure 2 is a sectioned schematic view of some elements of a reap-binder group for agricultural machines according to the present invention;
- figure 3 is an enlarged view of detail A of figure 2;
- figure 4 is a perspective view of an element of the reap-binder group of figure 2;
- figure 5 shows a known casing for a reap-binder group;
- figure 6 shows the new casing foreseen for the reap-binder group according to the present invention; and
- figure 7 shows a sectioned exploded view of the dust-tight means of the reap-binder group according to the present invention.

With reference to the figures, an example embodiment of a highly dust-tight reap-binder group according to the present invention is wholly shown with reference numeral 10.

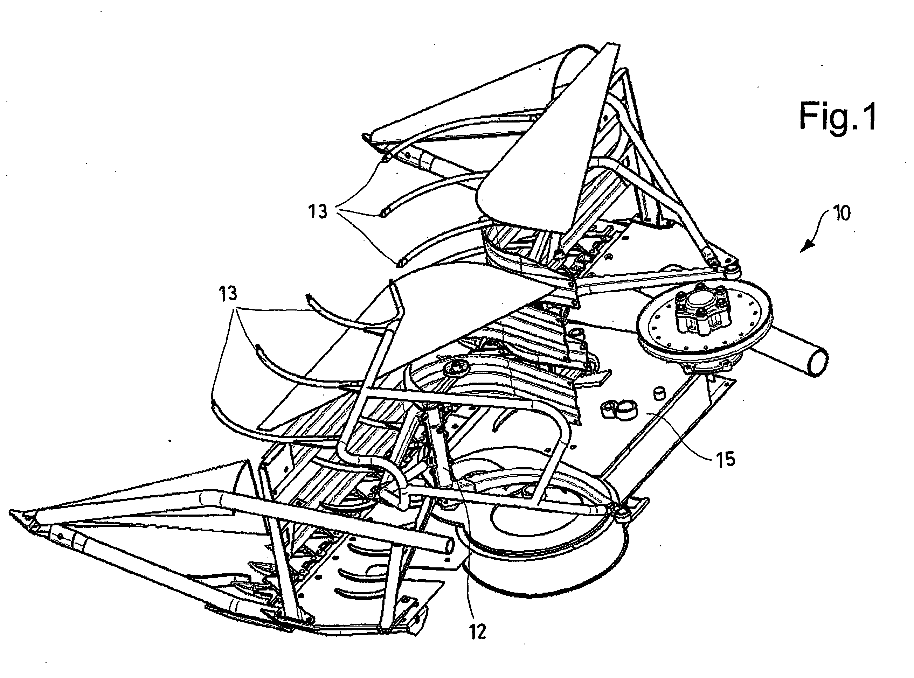

Such a reap-binder group 10, schematically shown in figure 1, comprises, like all analogous known groups, at least a drive shaft 12 of at least a forked element 13 in which such a drive shaft 12 is connected on one side to the aforementioned at least one forked element 13 and on the other to driving gears 14 of the shaft 12 itself placed inside a containment casing 15.

As shown, therefore, the drive shaft 12 passes beyond the casing 15 at a hole 11.

According to the invention, dust-tight means are foreseen placed at the hole 11 in which such dust-tight means comprise in succession at least a blocking barrier element for the dust and at least an accumulation chamber for the dust penetrated beyond such at least a barrier element.

Of course, by the term dust we mean particulates of various sizes, from dust of extremely volatile nature to sand with greater consistency and abrasive capability.

A first barrier to the penetration of dust into the hole 11 consists of a collar 16 projecting towards the outside of the casing 15 at the hole 11.

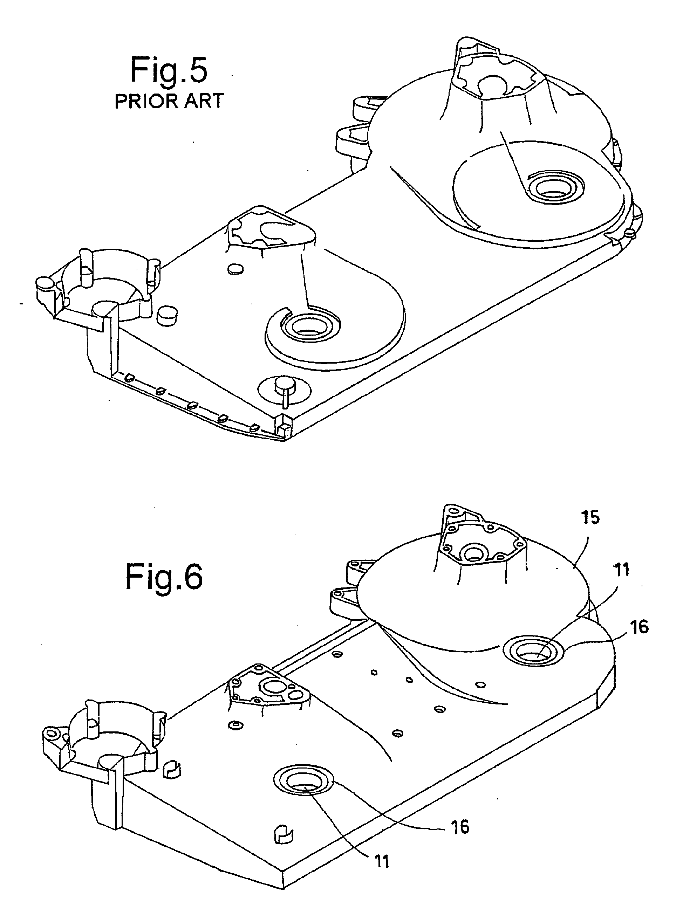

Such a collar 16, shown in figure 6, prevents the dust from penetrating into the hole 11 due simply to gravity as contrarily occurs in known groups in which at the holes, see figure 5, it is foreseen for there to be spiral-shaped portions which like a hopper convey the dust right inside the casing.

A disc element 18, obtained in an intermediate portion of the shaft 12 which acts as a plug for the hole 11, is placed in abutment above the hole 11.

Such a disc element 18, usually made from steel, is not however in direct contact with the upper portion of the collar 16 of the casing 15, usually made of aluminium, but is at a minimum distance controlled by an insert 17 fixedly connected onto the collar 16 towards the outside of the casing 15.

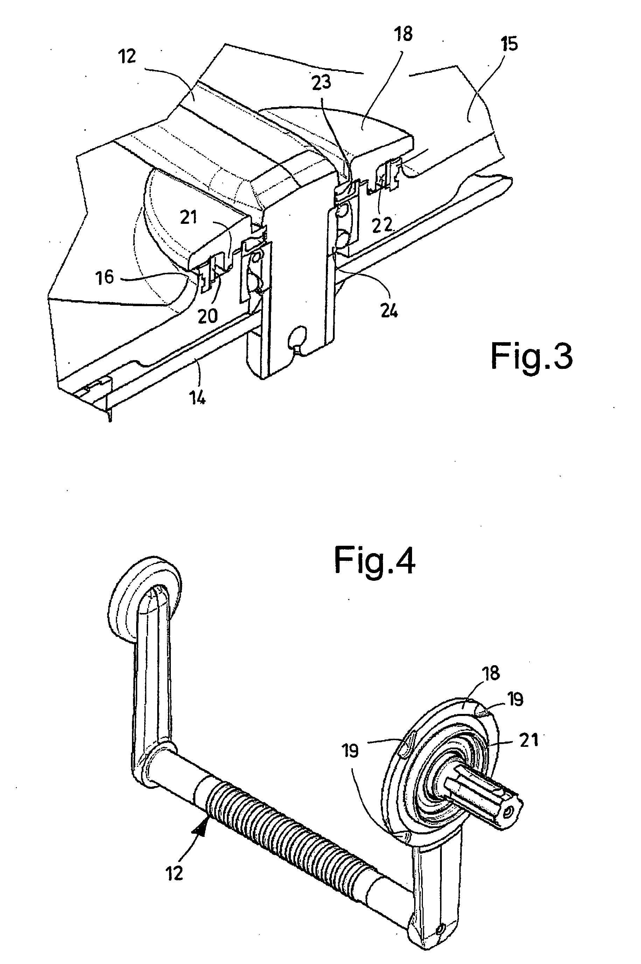

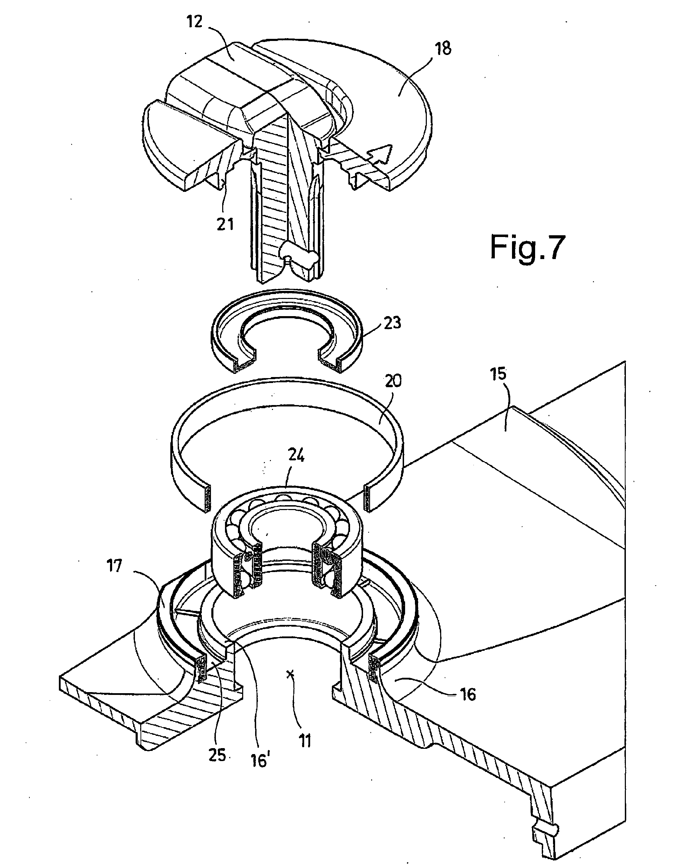

Such an insert 17, also made of steel, thus acts as an abutment surface against the disc 18 of the shaft 12. Such a coupling is visible in figures 3 and 7.

In order to expel the dust which is possibly able to pass beyond the collar 16, the abutment surface of the disc 18 is provided with expulsion notches 19 by centrifugation of such dust penetrated between the disc 18 and the insert 17.

In the case in which the dust further penetrates towards the hole 11, it hits against a first barrier element 20 consisting of a tubular element 20 concentrically mounted internally in lateral contact with the insert 17 in an annular neck 25 of the hole 11 defined by the collar 16 and by an inner collar 16' right at the hole 11.

In particular, the tubular element 20, preferably made of polytetrafluoroethylene, is mounted in the neck 25 in lateral contact with the insert 17 in interference between the casing 15, beneath, and the disc 18 above.

The disc 18 further has a circular projection 21 that is concentric with respect to the notches 19 in a position such as to be in lateral contact with the inner collar 16', so as to identify, along with the neck 25 and the tubular element 20, a first accumulation chamber 22 for the dust penetrated beyond the barrier tubular element 20.

Inside the hole 11 above the bearing 24 for supporting the shaft 12 a concave U-shaped ring element 23 is foreseen facing upwards.

Such a ring 23 performing the double function of second barrier and of second accumulation chamber for the dust penetrating inside the hole 11 passing beyond the first accumulation chamber 22.

Such a bearing 24 is finally provided with seal rubber shields.

This bearing 24 can advantageously have, for example, a double crown of oscillating balls, that is suitable for supporting high loads even when there are strong deformations of the shafts.

It is very easy to understand how the highly dust-tight reap-binder group object of the invention operates.

In particular, the reap-binder group object of the invention is provided with dust-tight means arranged at the passage hole of the drive shafts of the forks in the casing in which such means consist of a succession of dust anti-penetration barriers and of trapping and accumulating chambers for the dust possibly managed to penetrate beyond such barriers.

It has thus been seen that a highly dust-tight reap-binder group for agricultural machines according to the present invention achieve the purposes previously highlighted.

Indeed, the dust-tight means foreseen in the present invention prevent the penetration of dust inside the casing in an optimal manner, being capable at the same time of achieving a structure of the machine which is sufficiently flexible so as to best adapt to the ground and to the deformations induced by the cutting forces. The highly dust-tight reap-binder group for agricultural machines of the present invention thus conceived can undergo numerous modifications and variants, all covered by the same inventive concept as defined by the appended claims; moreover, all the details can be replaced by technically equivalent elements. In practice, the materials used, as well as their sizes, can be any according to the technical requirements.

## Claims

1. Reap-binder group (10) for agricultural machines comprising at least a drive shaft (12) of at least a forked element (13), said drive shaft (12) being connected at a first end to said at least a forked, element (13) and at a second end to driving gears (14) of said drive shaft (12) placed inside a containment casing (15), being provided with dust-tight mean placed at a passage hole (11) of said drive shaft (12) in said containment casing (15), **characterized in that** said dust-tight means comprise in succession at least a blocking barrier element (20) for said dust and at least an accumulating and trapping chamber (22) for the dust penetrated beyond said barrier element, said passage hole (11) of said at least a drive shaft (12) in said casing (15) being provided with a collar (16) in protrusion projecting towards the outside of said casing (15), said reap-binder group (10) comprising an insert (17) constrained on said collar (16) towards the outside of said casing (15), said insert (17) being in abutment for a disc element (18) obtained in an intermediate portion of said shaft (12), on the abutment surface against said insert (17) said disc (18) being provided with expulsion notches (19) by centrifugation of the dust penetrated between said disc (18) and said insert (17).

2. Reap-binder group (10) according to claim 1 **characterized in that** it comprises a first barrier element (20) consisting of a tubular element (20) concentrically mounted internally in lateral contact with said insert (17) in interference between beneath said casing (15) and above said disc (18).

3. Reap-binder group (10) according to claim 2 **characterized in that** said disc (18) and said insert (17) are made of steel, said tubular element (20) being made of polytetrafluorethilene.

4. Reap-binder group (10) according to claim 2 **characterized in that** said disc presents a circular projection (21) placed towards said hole (11) in an intermediate position of said disc (18), said circular projection (21) identifying along said casing (15) and said tubular element (20), a first accumulation chamber (22) for the dust penetrated beyond said barrier tubular element (20).

5. Reap-binder group (10) according to claim 4 **characterized in that** it comprises a concave U-shaped ring element (23) concentrically placed in said hole (11) performing the double function of second barrier and of second accumulation chamber for the dust penetrating into said hole beyond said circular relief projection (21).

6. Reap-binder group (10) according to claim 5 **characterized in that** it comprises a bearing (24) mounted on said shaft (12) in said hole (11) below said ring (23), said bearing (24) being provided with seal rubber shields.

## Patentansprüche

1. Ernte-Binder-Gruppe (10) für landwirtschaftliche Maschinen, die mindestens eine Antriebswelle (12) von mindestens einem gabelförmigen Element (13) umfasst, wobei diese Antriebswelle (12) an einem ersten Ende mit dem mindestens einen gabelförmigen Element (13) und an einem zweiten Ende mit Antrieben (14) der Antriebswelle (12) verbunden ist, die in einem Schutzgehäuse (15) angeordnet sind, das mit staubdichten Mitteln versehen ist, die an einem Durchgangsloch (11) für die Antriebswelle (12) in dem Schutzgehäuse (15) angeordnet sind, **dadurch gekennzeichnet, dass** die staubdichten Mittel nacheinander mindestens ein blockierendes Barriereelement (20) für den Staub und mindestens eine Sammel- und Fangkammer (22) für den jenseits des Barriereelements eingedrungenen Staub umfassen, wobei das Durchgangsloch (11) für die mindestens eine Antriebswelle (12) in dem Gehäuse (15) mit einem vorwölbend nach außerhalb des Gehäuses (15) hervorstehenden Kragen (16) versehen ist, wobei die Ernte-Binder-Gruppe (10) einen Einsatz (17) umfasst, der zur Außenseite des Gehäuses (15) hin auf dem Kragen (16) befestigt ist, wobei dieser Einsatz (17) in Anlage für ein Scheibenelement (18) ist, das in einem Zwischenabschnitt der Welle (12) erhalten ist, wobei diese Scheibe (18) auf der Anlagefläche gegen den Einsatz (17) mit Kerben (19) für den Ausstoß durch Zentrifugation des zwischen die Scheibe (18) und den Einsatz (17) eingedrungenen Staubs versehen ist.

2. Ernte-Binder-Gruppe (10) nach Anspruch 1, **dadurch gekennzeichnet, dass** sie ein erstes Barriereelement (20) umfasst, das aus einem röhrenförmigen Element (20) besteht, das konzentrisch innen in Seitenkontakt mit dem Einsatz (17) in Interferenz zwischen unten dem Gehäuse (15) und oben der Scheibe (18) montiert ist.

3. Ernte-Binder-Gruppe (10) nach Anspruch 2, **dadurch gekennzeichnet, dass** die Scheibe (18) und der Einsatz (17) aus Stahl bestehen, wobei das röhrenförmige Element (20) aus Polytetrafluorethylen besteht.

4. Ernte-Binder-Gruppe (10) nach Anspruch 2, **dadurch gekennzeichnet, dass** die Scheibe einen kreisrunden Vorsprung (21) aufweist, der in Richtung des Lochs (11) in einer Zwischenposition der Scheibe (18) angeordnet ist, wobei dieser kreisrunde Vorsprung (21) entlang dem Gehäuse (15) und dem röhrenförmigen Element (20) eine erste Sammelkammer (22) für den jenseits des röhrenförmigen Barriereelements (20) eingedrungenen Staub identifiziert.

5. Ernte-Binder-Gruppe (10) nach Anspruch 4, **dadurch gekennzeichnet, dass** sie ein konkaves U-förmiges Ringelement (23) umfasst, das konzentrisch in dem Loch (11) angeordnet ist und die doppelte Funktion einer zweiten Barriere und einer zweiten Sammelkammer für den in das Loch jenseits des kreisrunden erhabenen Vorsprungs (21) eindringenden Staub erfüllt.

6. Ernte-Binder-Gruppe (10) nach Anspruch 5, **dadurch gekennzeichnet, dass** sie ein Lager (24) umfasst, das auf die Welle (12) in dem Loch (11) unter dem Ring (23) montiert ist, wobei dieses Lager (24) mit Dichtungsgummischirmen versehen ist.

## Revendications

1. Groupe de moissonneuse-lieuse (10) pour machines agricoles comprenant au moins un arbre de transmission (12) d'au moins un élément en forme de fourche (13), ledit arbre de transmission (12) étant connecté à une première extrémité audit au moins un élément en forme de fourche (13) et à une deuxième extrémité à des engrenages d'entraînement (14) dudit arbre de transmission (12) placés à l'intérieur d'une enveloppe de confinement (15), qui est munie de moyens étanches à la poussière placés au niveau d'un trou de passage (11) dudit arbre de transmission (12) dans ladite enveloppe de confinement (15), **caractérisé en ce que** lesdits moyens étanches à la poussière comprennent en succession au moins un élément de barrière de blocage (20) pour ladite poussière et au moins une chambre d'accumulation et de piégeage (22) pour la poussière ayant pénétré au-delà dudit élément de barrière, ledit trou de passage (11) dudit au moins un arbre de transmission (12) dans ladite enveloppe (15) étant muni d'un collier (16) en saillie faisant saillie vers l'extérieur de ladite enveloppe (15), ledit groupe de moissonneuse-lieuse (10) comprenant un insert (17) bloqué sur ledit collier (16) vers l'extérieur de ladite enveloppe (15), ledit insert (17) étant en butée pour un élément de disque (18) obtenu dans une portion intermédiaire dudit arbre (12), sur la surface de butée contre ledit insert (17), ledit disque (18) étant pourvu d'encoches d'expulsion (19) par centrifugation de la poussière ayant pénétré entre ledit disque (18) et ledit insert (17).

2. Groupe de moissonneuse-lieuse (10) selon la revendication 1, **caractérisé en ce qu'**il comprend un premier élément de barrière (20) consistant en un élément tubulaire (20) monté de manière concentrique, intérieurement en contact latéral avec ledit insert (17) en interférence entre au-dessous de ladite enveloppe (15) et au-dessus dudit disque (18).

3. Groupe de moissonneuse-lieuse (10) selon la revendication 2, **caractérisé en ce que** ledit disque (18) et ledit insert (17) sont réalisés en acier, ledit élément tubulaire (20) étant réalisé en polytétrafluoroéthylène.

4. Groupe de moissonneuse-lieuse (10) selon la revendication 2, **caractérisé en ce que** ledit disque présente une saillie circulaire (21) placée vers ledit trou (11) dans une position intermédiaire sur ledit disque (18), ladite saillie circulaire (21) identifiant, le long de ladite enveloppe (15) et dudit élément tubulaire (20), une première chambre d'accumulation (22) pour la poussière ayant pénétré au-delà dudit élément tubulaire de barrière (20).

5. Groupe de moissonneuse-lieuse (10) selon la revendication 4, **caractérisé en ce qu'**il comprend un élément annulaire en forme de U concave (23) placé de manière concentrique dans ledit trou (11) remplissant la double fonction de deuxième barrière et de deuxième chambre d'accumulation pour la poussière pénétrant dans ledit trou au-delà de ladite saillie en relief circulaire (21).

6. Groupe de moissonneuse-lieuse (10) selon la revendication 5, **caractérisé en ce qu'**il comprend un palier (24) monté sur ledit arbre (12) dans ledit trou (11) au-dessous dudit anneau (23), ledit palier (24) étant muni d'écrans en caoutchouc d'étanchéité.
